# EUROPEAN PATENT SPECIFICATION

(11) **EP 2 031 345 B1**
(45) Date of publication and mention of the grant of the patent: **24.02.2010**
(21) Application number: 08162979.2
(22) Date of filing: 26.08.2008
(51) Int. Cl.: G01B 5/012, G01B 21/04, G01B 1/00

(54) **Probe tip and cleaning thereof**
Tasterspitze und deren Reinigung
Palpeur et son nettoyage

(30) Priority: 27.08.2007 JP 2007220205
(43) Date of publication of application: 04.03.2009
(73) Proprietor: Mitutoyo Corporation, Kawasaki-shi, Kanagawa 213-8533 (JP)
(72) Inventor: Aoki, Toshihiko, Kawasaki-shi Kanagawa 213-8533 (JP)
(74) Representative: Skone James, Robert Edmund

(56) References cited:
- WO-A-2007/053788
- DE-A1- 19 826 641
- US-B1- 6 240 651

## Description

The present invention relates to a shape measuring machine and a contact-type probe thereof (simply referred to as a probe) and, in particular, to a shape measuring machine equipped with a probe which is preferably used in a shape measuring machine that measures the shape of an object to be measured by bringing the probe into direct contact with the object to be measured and makes it possible to decompose and remove contamination when the probe is contaminated and to the probe thereof.

In a measuring machine which measures a shape of an object to be measured, during measurement of the object to be measured, contamination including dust or oil is gradually adhered to the tip end of a probe. Then measurement accuracy deteriorates due to a change in contact sensitivity or in the tip end shape of the probe.

In order to maintain measurement accuracy, it is necessary to remove a probe and clean the probe. Alternatively, as shown in Japanese Published Unexamined Patent Application No. 2000-35325 (Patent Document 1), it has been proposed that, the tip end of the probe is appropriately cleaned by blowing air in place of removal of the probe. US-B-6240651 and DE-A-19826641 also propose cleaning such probes using compressed air, rinsing baths and/or ultrasound.

However, in particular, a micro probe (the tip end diameter of the probe is 100 µm or smaller) and an easily breakable probe are easily damaged by being broken or bent when handled in attaching or detaching for cleaning, thus making it difficult to clean the probes.

Also, as shown in Patent Document 1, even when a probe is cleaned by blowing air without removing the probe, there may be a case where the probe is not sufficiently cleaned, depending on the extent or type of contamination (also referred to as dirt).

WO-A-2007/053788 discloses the use of a photocatalyst film on a window for self-cleaning purposes.

The present invention has been made in order to solve the above-described problems and, an object thereof is to provide a shape measuring machine equipped with a probe in which organic contamination (dirt caused by adhered organic substances) is removed by subjecting the surface to self cleaning due to decomposition of the organic substances and such dirt that requires cleaning is also easily removed by controlling the hydrophilic property and also to provide the probe.

A first aspect of the present invention is a probe (124) for a shape measuring machine (100) which is arranged to measure a shape of an object (102) to be measured by bringing a surface thereof into direct contact with the object to be measured, wherein a photocatalyst film (124b) is formed on the surface of the probe, thereby solving the above problems.

The invention further provides a shape measuring machine (100) which is arranged to measure a shape of an object (102) to be measured by bringing a probe (124) into direct contact with the object to be measured, wherein the shape measuring machine comprises a probe as described above, the photocatalyst film being provided on a surface of a tip end (124a) of the probe.

Preferably, the shape measuring machine is provided with a light source for activating the photocatalyst film.

Advantageously, the light source is lit in a state where an object to be measured is not measured for the shape.

Preferably, a state where the object to be measured is not measured for the shape is at night.

Advantageously, the probe is cleaned when an abnormal shape measurement value is detected.

Preferably, light is to be irradiated after cleaning.

Still preferably, light is constantly irradiated to the probe.

Advantageously, the photocatalyst film contains a metal oxide.
Preferably, the photocatalyst film contains at least one of carbon and nitrogen.

A second aspect of the present invention is to provide a method of cleaning a probe of a shape measuring machine which measures a shape of an object to be measured by bringing a surface of the probe into direct contact with the object to be measured, the probe having a photocatalyst film formed on its surface, comprising:
irradiating the probe with light to thereby activate the photocatalyst.

According to the present invention, organic contamination can be decomposed, and inorganic contamination (dirt caused by adhered inorganic substances) and contamination that is not completely decomposed and requires cleaning (hereinafter referred to as inorganic contamination and the like) can also be easily removed by cleaning, thus making it possible to keep the surface of the probe clean. In other words, a decrease in performance and measurement errors resulting from the influence of contamination can be reduced, thereby making it possible to maintain a favorable measurement accuracy.

Further, it is possible to decrease the number of times of attaching and detaching a probe for cleaning the probe, thereby improving workability. Then, it is also possible to decrease or prevent damage of the probe due to attachment or detachment.

These and other novel features and advantages of the present invention will become apparent from the following detailed description of preferred embodiments.

The preferred embodiments will be described with reference to the drawings, wherein like elements have been denoted throughout the figures with like reference numerals, and wherein;
Fig. 1 is a constitutional schematic diagram of a shape measuring machine main body according to a first embodiment of the present invention.
Fig. 2 is a pattern diagram showing a relationship between light sources and a probe mounted on the shape measuring machine according to the first embodiment of the present invention.
Fig. 3 is an entire block diagram showing the shape measuring machine according to the first embodiment of the present invention.
Fig. 4 is a pattern diagram showing a relationship between light sources and a probe according to a second embodiment of the present invention.

Hereinafter, a detailed description is given for embodiments of the present invention with reference to the drawings.

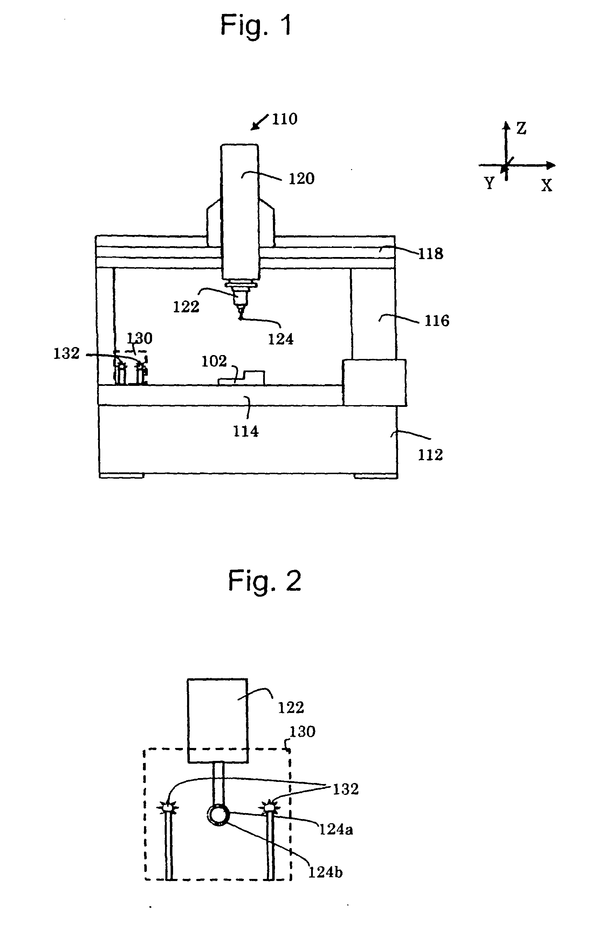

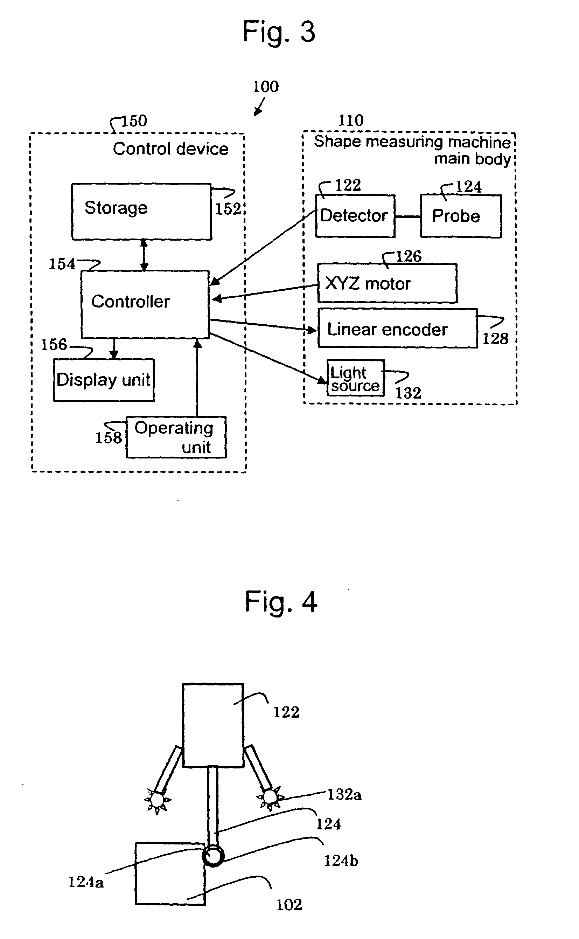

The first embodiment of the present invention will be explained with reference to Fig. 1 to Fig. 3. Fig. 1 is a construction schematic diagram of a shape measuring machine main body of the present embodiment. Fig. 2 is a pattern diagram showing a relationship between light sources and a probe mounted on the shape measuring machine. Fig. 3 is an entire block diagram of the shape measuring machine.

As shown in Fig. 3, a shape measuring machine 100 is substantially divided into a shape measuring machine main body 110 and a control device 150. First, a description is given for the shape measuring machine main body 110 with reference to Fig. 1.

The shape measuring machine main body 110 is, for example, a main body of a three-dimensional coordinate measuring machine, includes a press platen 114 on a base 112, and has a head 120 on a gate-shaped frame on the press platen. On the head 120, a detector 122 is provided, and to its tip end, a probe 124 is attached. The gate-shaped frame is made up of a pair of columns 116 rising from the press platen 114 and a beam 118 laid across the pair of columns 116. The columns 116 support the beam 118, and the head 120 is movable in the left and right direction (X direction) along the beam 118. The detector 122 attached to the head 120 is movable in the up and down direction (Z direction) in the drawing. The columns 116 are movable in the front and rear direction (Y direction) on the press platen 114, so that the head 120 is also movable in the Y-axis direction. The detector 122 is able to detect pressure and deformation via the probe 124 in the X, Y, and Z directions. As shown in Fig. 3, for these movements, XYZ motors 126 are used, and moving distances in the respective directions are measured by linear encoders 128.

As shown in Fig. 2, the probe 124 is, for example, provided with a probe sphere 124a at the tip end. Then, a photocatalyst film 124b is uniformly formed on the surface of the probe sphere 124a. It is noted that a photocatalyst is a substance which facilitates chemical reactions on exposure to light without itself changing substantially (to be described later). In the present embodiment, for example, titanium oxide (TiO₂), which is a metal oxide, can be mainly used as a photocatalyst. Among CVD (chemical vapor deposition) (including atmospheric pressure CVD, plasma CVD and photo-excited CVD) better in coating property than other methods such as sputtering and vapor deposition, plasma CVD is, in particular, used in order to form a uniform film. This is because plasma CVD is an effective method by which a film is easily formed without heating a substrate and no thermal damage is given to the probe 124.

As shown in Fig. 1, light sources 132 can be disposed, for example, on one corner 130 on the press platen 114. Since the tip end of the probe 124 is spherical, for example, two (preferably ultraviolet) lamps can be disposed as the light sources 132. Further, as shown in Fig. 2, when the probe 124 moves and halts at a predetermined position, the probe sphere 124a is located exactly in the middle of these two light sources 132 and constituted so that an ultraviolet ray is irradiated uniformly to the probe sphere 124a at the tip end thereof.

Next, a description is given for a control device 150 with reference to Fig. 3. The control device 150 is provided with a storage 152, a controller 154, a display unit 156 and an operating unit 158.

The storage 152 is connected to the controller 154, and set values and programs necessary for controlling the shape measuring machine main body 110 are read therein. Programs and others for controlling the light sources 132 are also read therein.

The controller 154 is connected to the detector 122, the XYZ motors 126, the linear encoders 128 and the light sources 132. When measuring an object to be measured 102, for example, the XYZ motors 126 are driven so that the pressure or displacement applied to the detector 122 via the probe 124 is made constant, and the shape of the object to be measured 102 can be obtained from the values of the linear encoders 128 at this time.

The display unit 156 is connected to the controller 154 and provided with a monitor screen and a speaker, and necessary information is transmitted to an operator with images and voice whenever necessary.

The operating unit 158 is provided with input devices such as a keyboard and a mouse and connected to the controller 154. Instructions are input by an operator whenever necessary.

Next, a description is given for functions of the photocatalyst film 124b.

Since the photocatalyst film 124b of the present embodiment contains titanium oxide, light is irradiated to activate photocatalyst functions, thus producing a potent oxidative power. As a result, organic contamination adhered to the surface of the photocatalyst film 124b is oxidized to decompose into water and carbon dioxide. Accordingly, the organic contamination is decomposed, thus making it possible to keep the surface of the photocatalyst film 124b clean.

When light is irradiated, the surface of the titanium oxide-containing photocatalyst film 124b is given an excellent hydrophilic property. For this reason, wettability is improved, and water easily comes into a space between the surface and organic contamination or inorganic contamination adhered to the surface, thus making it possible to easily wash away the organic contamination, the inorganic contamination or the like by using water or a drug (chemical) solution in which water is used as a solvent (i.e. an aqueous solution). Further, the hydrophilic property is provided to exert such effects that dirt is less likely to adhere thereto.

It is noted that in order to activate titanium oxide, light energy corresponding to band gap energy between the conduction band of titanium oxide and the valence band is required, and the energy is light at an ultraviolet ray region (400nm or less). Then, titanium oxide is characterized in that it keeps photocatalyst effects for a long time after activation (from the above description, it has a potent oxidative power and an excellent hydrophilic property). On activation, it is possible to impart the hydrophilic property to the photocatalyst film 124b at a light quantity smaller than that imparting a potent oxidative power.

Next, a description is given for actions of the present embodiment.

In a state where the object to be measured 102 is not being measured for the shape, for example, during a predetermined period of time at night or the like, the probe 124 is allowed to move to one corner 130 on the press platen 114, and in a position shown in Fig. 2, the light source 132 is lit. If the time during which light is irradiated to the photocatalyst film 124b (activation time) is, for example, several dozen minutes this is sufficient for maintaining the photocatalyst effects over one day or longer. In other words, even when the object to be measured 102 is measured for its shape for a whole day, dust is less likely to adhere due to the presence of the photocatalyst film 124b, and when organic contamination is generated, the organic contamination is decomposed, thus making it possible to keep the surface of the probe 124 clean. As a result, it is possible to minimize shape errors resulting from dirt.

Further, in the case of inorganic contamination or the like, the hydrophilic property is exhibited to improve wettability of the photocatalyst film 124b on cleaning with water or a drug solution, thereby making it possible to enhance the cleaning effects and easily wash away the inorganic contamination and others. Therefore, at a stage where shape measurement values are found abnormal, it is possible to carry out measurements again after cleaning and quickly verify the shape measurement values. It is noted that after measurement of the shape, light is again irradiated to the photocatalyst film 124b, by which wettability of the drug solution can be further improved to increase the cleaning effects and shorten the cleaning time.

As described so far, since the organic contamination can be decomposed and the inorganic contamination or the like can also be removed easily by means of cleaning, it is possible to keep the probe 124 constantly clean. In other words, a decrease in performance and measurement errors resulting from contamination can be reduced, thereby making it possible to maintain favorable measurement accuracy.

Further, the photocatalyst film 124b can be activated without removing the probe 124 and the probe 124 can be attached or detached for cleaning at a smaller number of times, resulting in an improved workability. Then, it is also possible to decrease or prevent damage of the probe 124 due to attachment or detachment.

More specifically, a micro probe (the tip diameter of the probe is 100 µm or smaller) and an easily breakable probe can omit cleaning with a drug (chemical) solution due to the decomposing and cleaning (self-cleaning) function on the surface with regard to organic contamination thereof. In other words, the probe 124 can be attached or detached for cleaning at a smaller number of times, thus making it possible to reduce damage to the probe 124 on handling of the probe 124. Further, when cleaning with a drug (chemical) solution, the hydrophilic property is controlled, thereby the probe can be prevented from damage such as breakage or bending when the surface tension of the drug solution is made problematic in soaking the probe 124 in the drug solution. Still further, due to photocatalyst effects, cleaning power more satisfactory than cleaning by air can be obtained. In addition, cleaning with a drug (chemical) solution may be conducted in combination with cleaning by air.

The light sources 132 may be provided on the press platen 114. Since provision of the light sources 132 causes no change in the shape of the probe 124 and the detector 122, the object to be measured 102 can be measured for the shape at a degree of freedom similar to that of the conventional shape measuring machine.

Further, since the photocatalyst film 124b is formed by plasma CVD, a uniform film is formed on a probe sphere 124a to give no thermal damage to the probe 124, thereby shape accuracy of the probe sphere 124a is not impaired due to the influence of the photocatalyst film, and shape measurement errors can be minimized.

In the first embodiment, although the activation time is set to several dozen minutes, the present invention is not limited thereto, and the activation time can be less or more, for example set to several hours. In this case, the photocatalyst effects can be provided so as to last for several days.

Further, in the first embodiment, the photocatalyst film 124b is activated in a state where no measurement is being made of the shape, however, the present invention is not limited thereto. As shown by disposing a light source 132a according to the second embodiment of the present invention given in Fig. 4, the light source 132a may be mounted on the detector 122 so that light can be constantly irradiated even on measurement. In this case, it is not necessary to provide the light source 132 on the one corner 130 on the press platen 114 shown in the first embodiment. Therefore, it is possible to obtain a greater degree of freedom on the position and size of the object to be measured 102. Still further, the photocatalyst film 124b is kept activated constantly and exhibits greater photocatalyst effects, thus making it possible to keep the probe 124 cleaner as compared with the first embodiment.

Further, the light sources 132 are not limited to an ultraviolet lamp. LEDs may be usable as long as they are a light source for an ultraviolet ray or other wavelength suitable for activating the photocatalyst. Still further, the number of light sources 132 is not limited to two, and one or more of them may be acceptable. The light sources 132 are mounted on the press platen 114, however, the present invention is not limited thereto. A tubular body to enclose the probe 124 is provided on the head 120 so as to also serve as a cover for protecting the probe 124 when the shape measurement is halted, thereby the probe 124 may be housed manually or automatically to light an ultraviolet lamp provided on the tubular body.

Further, the present invention is not limited to only a case where the light sources 132 are necessarily provided on the shape measuring machine 100. For example, the light sources 132 are provided outside the shape measuring machine 100, and the probe 124 is removed from the shape measuring machine 100, whenever necessary, thus the light sources 132 may be brought downward to irradiate light. In this instance, a conventional shape measuring machine excluding the probe 124 may be used as it is. Therefore, only the light sources 132 and the probe 124 are provided, by which the present invention can be realized quickly, easily and at an extremely low cost.

Further, light irradiated from light sources is not limited to an ultraviolet ray. Visible light may also be used as long as it is light having energy for exhibiting the photocatalyst effects of the photocatalyst film.

Further, the photocatalyst film is not manufactured only by a method described in the present embodiment. Another method includes a film forming method based on monomolecular film-forming technology using a liquid (LB method and the like). According to this film forming method, one layer is about several nanometers in thickness, and it is necessary to repeat coating procedures several times in order to obtain a uniform target film thickness of the present invention. However, soaking in a liquid makes it possible to form a uniform photocatalyst film, and also the film thickness distribution can be controlled at the monomolecular layer level, thereby the shape of film thickness can be controlled more properly.

Still further, the photocatalyst film is not limited to a film containing titanium oxide. It may contain other metal oxides such as tin oxide, zinc oxide, and tungsten oxide. Therefore, the compositions of the photocatalyst film are not limited to titanium oxide, tin oxide, zinc oxide and tungsten oxide, and nitrogen and carbon may be added thereto in a small quantity. For example, during formation of titanium oxide by CVD, a small quantity of nitrogen or carbon is simultaneously introduced, thereby titanium oxide is partially changed into titanium nitride or titanium carbon. Therefore, the photocatalyst film is increased in hardness, making it possible to improve the durability of the probe 124 and make the service life longer.

In addition, the photocatalyst film can be controlled for hydrophilic property. It can also be actively controlled for hydrophilic property and water repellency. For example, where a repellent binder (such as fluorinated resin) and a photocatalytic substance are used to form a film, the water repellency of the binder can be made predominant by suppressing the activation of the photocatalyst film. Alternatively, where the photocatalytic substance is also water repellent, it is possible to utilize both the hydrophilic property and water repellency, depending on activation conditions.

## Claims

1. A probe (124) for a shape measuring machine (100) which is arranged to measure a shape of an object (102) to be measured by bringing a surface thereof into direct contact with the object to be measured, wherein
a photocatalyst film (124b) is formed on the surface of the probe.

2. A shape measuring machine (100) which is arranged to measure a shape of an object (102) to be measured by bringing a probe (124) into direct contact with the object to be measured, wherein
the shape measuring machine comprises a probe (124) according to claim 1, the photocatalyst film (124b) being provided on a surface of a tip end (124a) of the probe.

3. The shape measuring machine according to claim 2, including
a light source (132,132a) for activating the photocatalyst.

4. The shape measuring machine according to claim 3, wherein
the light source (132) is lit in a state where an object (102) to be measured is not being measured for its shape.

5. The shape measuring machine according to claim 4, wherein
the state where the object (102) to be measured is not being measured for its shape is at night.

6. The shape measuring machine according to any of claims 2 to 5, wherein the photocatalyst film (124b) is activated in order to clean the probe (124) when an abnormal shape measurement value is detected.

7. The shape measuring machine according to claim 6, wherein
light is to be irradiated after cleaning.

8. The shape measuring machine according to any of claims 2 to 7, wherein
light is constantly irradiated to the probe (124).

9. The shape measuring machine according to any of claims 2 to 8, wherein
the photocatalyst film (124b) contains a metal oxide.

10. The shape measuring machine according to any of claims 2 to 9, wherein
the photocatalyst film (124b) contains at least one of carbon and nitrogen.

11. A method of cleaning a probe of a shape measuring machine (100) which measures a shape of an object (102) to be measured by bringing a surface of the probe into direct contact with the object to be measured, the probe having a photocatalyst film (124b) formed on its surface, comprising:
irradiating the probe with light thereby activating the photocatalyst.

12. A method according to claim 11, further comprising:
washing the probe with an aqueous solution.

13. A method according to claim 12, wherein the probe is washed after irradiation or simultaneously during radiation.

14. A method according to claim 11 or claim 12 wherein the probe is irradiated again after washing.

15. A method according to any of claims 11 to 14 using a shape measuring machine according to any of claims 2 to 10.

## Patentansprüche

1. Ein Fühler (124) für ein Formmessgerät (100), das ausgerichtet ist, um die Form eines zu messenden Objektes (102) zu messen, indem die Oberfläche hiervon in direkten Kontakt mit dem zu messenden Objekt gebracht wird, wobei eine photokatalytische Schicht (124b) auf der Oberfläche des Fühlers gebildet wird.

2. Ein Formmessgerät (100), das ausgerichtet ist, um die Form eines zu messenden Objektes (102) zu messen, indem ein Fühler (124) in direkten Kontakt mit dem zu messenden Objekt gebracht wird, wobei das Formmessgerät einen Fühler (124) gemäß Anspruch 1 umfasst und die photokatalytische Schicht (124b) auf der Oberfläche eines Spitzenendes (124a) des Fühlers gebildet wird.

3. Das Formmessgerät gemäß Anspruch 2, inklusive einer Lichtquelle (132, 132a) zur Aktivierung des Photokatalysators.

4. Das Formmessgerät gemäß Anspruch 3, wobei die Lichtquelle (132) in einem Zustand erleuchtet wird, in welchem ein zu messendes Objekt (102) nicht auf seine Form gemessen wird.

5. Das Formmessgerät gemäß Anspruch 4, wobei der Zustand, in welchem ein zu messendes Objekt (102) nicht für seine Form gemessen wird, nachts ist.

6. Das Formmessgerät gemäß einem der Ansprüche 2 bis 5, wobei die photokatalytische Schicht (124b) aktiviert wird, damit der Fühler (124) gereinigt wird, wenn ein anormaler Formmesswert ermittelt wird.

7. Das Formmessgerät gemäß Anspruch 6, wobei nach der Reinigung mit Licht bestrahlt werden soll.

8. Das Formmessgerät gemäß einem der Ansprüche 2 bis 7, wobei das Licht konstant auf den Fühler (124) bestrahlt wird.

9. Das Formmessgerät gemäß einem der Ansprüche 2 bis 8, wobei die photokatalytische Schicht (124b) ein Metalloxid enthält.

10. Das Formmessgerät gemäß einem der Ansprüche 2 bis 9, wobei die photokatalytische Schicht (124b) mindestens ein Kohlenstoff und Stickstoff enthält.

11. Eine Methode zur Reinigung eines Fühlers eines Formmessgeräts (100), das die Form eines zu messenden Objektes (102) misst, indem die Oberfläche des Fühlers in direkten Kontakt mit dem zu messenden Objekt gebracht wird, der Fühler eine photokatalytische Schicht (124b) enthält, das auf seiner Oberfläche gebildet wird, enthaltend:
Bestrahlung des Fühlers mit Licht, dabei wird der Photokatalysator aktiviert.

12. Eine Methode gemäß Anspruch 11, zusätzlich enthaltend:
Waschen des Fühlers mit einer wässrigen Lösung.

13. Eine Methode gemäß Anspruch 12, wobei der Fühler nach der Bestrahlung oder gleichzeitig während der Bestrahlung gewaschen wird.

14. Eine Methode gemäß Anspruch 11 oder 12, wobei der Fühler nach dem Waschen erneut bestrahlt wird.

15. Eine Methode gemäß einem der Ansprüche 11 bis 14, wobei ein Formmessgerät gemäß einem der Ansprüche 2 bis 10 verwendet wird.

## Revendications

1. Une sonde (124) pour une machine de mesure des formes (100) qui est disposée de manière à mesurer la forme de l'objet (102) à mesurer en mettant une surface de la sonde en contact direct avec l'objet à mesurer, formant ainsi un film photocatalyseur (124b) sur la surface de la sonde.

2. Une machine de mesure des formes (100) qui est disposée de manière à mesurer la forme de l'objet (102) à mesurer en mettant la sonde (124) en contact direct avec l'objet à mesurer, ladite machine comportant une sonde (124) comme décrit en 1., le film photocatalyseur (124b) étant fourni sur la surface de l'extrémité (124a) de la sonde.

3. La machine de mesure des formes comme décrite en section 2., avec l'addition d'une source lumineuse (132, 132a) afin d'activer le photocatalyseur.

4. La machine de mesure des formes comme décrite en section 3., lorsque la source lumineuse (132) illumine un objet (102) à mesurer alors que les formes de l'objet ne sont pas mesurées.

5. La machine de mesure des formes comme décrite en section 4., lorsque les formes de l'objet (102) à mesurer ne sont pas mesurées sans lumière.

6. La machine de mesure des formes comme décrite en section 2., 3., 4. ou 5., lorsque le film photocatalyseur (124b) est activé afin de nettoyer la sonde (124) lors de la détection d'une valeur de mesure de forme anormale.

7. La machine de mesure des formes comme décrite en section 6., lorsque la source lumineuse est à irradier à la suite du nettoyage.

8. La machine de mesure des formes comme décrite de section 2. à section 7., lorsque la source lumineuse est irradiée en continu sur la sonde (124).

9. La machine de mesure des formes comme décrite de section 2. à section 8., lorsque le film photocatalyseur (124b) contient un oxyde de métal.

10. La machine de mesure des formes comme décrite de section 2. à section 9., lorsque le film photocatalyseur (124b) contient au moins une part de carbone et d'azote.

11. Une méthode de nettoyage de la sonde sur une machine de mesure des formes (100) qui mesure les formes d'un objet (102) à mesurer en mettant la surface de la sonde en contact direct avec l'objet à mesurer alors qu'un film photocatalyseur (124b) se forme sur la surface de la sonde, comportant : l'irradiation de la sonde par une source lumineuse, activant ainsi le photocatalyseur.

12. Une méthode selon section 11., comportant aussi : le nettoyage de la sonde par solution aqueuse.

13. Une méthode selon section 12., permettant le nettoyage de la sonde à la suite de l'irradiation ou pendant la durée de l'irradiation.

14. Une méthode selon 11. ou 12., par laquelle la sonde est irradiée de nouveau après le nettoyage.

15. Une méthode selon 11. à 14. Utilisant une machine de mesure des formes comme décrite en 2. à 10.
